# EUROPÄISCHE PATENTSCHRIFT

(11) **EP 3 164 338 B1**
(45) Veröffentlichungstag und Bekanntmachung des Hinweises auf die Patenterteilung: **11.11.2020**
(21) Anmeldenummer: 15731546.6
(22) Anmeldetag: 18.06.2015
(51) Int. Cl.: B65D 47/26, B65D 47/32, F16N 3/04, F16N 37/00

(54) **AUSGIESSVERSCHLUSS FÜR DEN STUTZEN EINES KANISTERS ODER BELIEBIGEN BEHÄLTERS ZUM KONTROLLIERTEN MEHRSEITIGEN AUSGIESSEN**
POURING CLOSURE FOR THE SPOUT OF A CANISTER OR ANY CONTAINER FOR CONTROLLED MULTI-SIDE POURING
BOUCHON VERSEUR POUR LE MANCHON D'UN JERRICAN OU D'UN RÉCIPIENT QUELCONQUE POUR LE VERSEMENT CONTRÔLÉ VERS PLUSIEURS CÔTÉS

(30) Priorität: 03.07.2014 CH 10132014
(43) Veröffentlichungstag der Anmeldung: 10.05.2017
(73) Patentinhaber: Capartis AG, 8200 Schaffhausen (CH)
(72) Erfinder: WOHLGENANNT, Herbert, 8200 Schaffhausen (CH)
(74) Vertreter: Dr. Graf & Partner AG
(86) Internationale Anmeldenummer: PCT/EP2015/063702
(87) Internationale Veröffentlichungsnummer: WO 2016/000975

(56) Entgegenhaltungen:
- EP-A1- 1 746 041
- EP-A2- 1 283 175
- WO-A1-96/30273
- WO-A1-2006/008285

## Beschreibung

Die Erfindung betrifft einen Ausgiessverschluss für den Stutzen eines Kanisters oder beliebigen Behälters, wobei dieser Ausgiessverschluss als Besonderheit ein kontrolliertes Ausgiessen des Kanister- oder Behälterinhalts nach vorwärts und seitwärts, das heisst bis hin auf die beiden um 90° von vorne abgewanden beiden Seiten des Ausgiess-Stutzens ermöglicht. Bei diesem Inhalt kann es sich um eine Flüssigkeit handeln, eine wässrige bis dickflüssig ölige, oder auch um ein rieselfähiges Schüttgut wie etwa Salz oder Ähnliches.

Ein Kanister, besonders ein Ölkanister, ist meistens ein Behälter von kubischer Gestalt. Motoröl-Kanister sind als Kunststoff-Behälter im Gebrauch und ihr kubischer Behälter ist in der Regel oben abgeschrägt, sodass er eine schief zu einer horizontalen Unterlage verlaufende Oberseite aufweist. An der höchsten Stelle ist dann der Kanisterstutzen mit seinem Deckel mit seiner Rotationsachse senkrecht zur horizontalen Unterlage verlaufend angeordnet. Diese Formgebung erleichtert das Einfüllen in einen Öleinfüllstutzen an einem Motor. Die Öleinfüllstutzen sind in den meisten Fällen annähernd bündig mit weiteren Motorteilen am Motor angeordnet, sodass das Einfüll-Loch von einer dieses Loch etwa auf gleicher Höhe umschliessenden Fläche eingefasst ist. Dies aber verunmöglicht ein Ansetzen des Kanisterstutzens direkt und nahe am Einfüll-Loch, weshalb man den Einfüllstutzen am Motor mit dem Ausgiess-Strahl aus einer gewissen Höhe treffen muss, und der Strahl fliesst dann anfänglich über fast eine Kanisterhöhe frei in den Einfüllstutzen. Damit der Ölkanister hierzu mit seinem Ausgiess-Stutzen wenigstens ein stückweit gegen den Einfüllstutzen hin geneigt werden kann, bevor Öl ausströmt, ist seine Oberseite abgeschrägt gestaltet. Ohne diese Abschrägung würde bereits bei geringster Neigung des Kanisters sogleich Öl aus dem Kanisterstutzen auslaufen und der Strahl könnte sich nicht sauber vom Ausgiess-Stutzenrand lösen. Ein Verschütten von Öl über den Motor oder Motorraum wäre somit unvermeidlich. Mit der Abschrägung hingegen kann erreicht werden, dass der Kanister über seine Schmalseite um etwa 30° bis 40° geneigt werden kann und Flüssigkeit erst dann aus ihm austritt. Der mit dieser Gestaltung der Ölkanister erzielte Vorteil kann jedoch nicht über die Schwierigkeit des Einfüllvorgangs hinwegtäuschen. Ein gefüllter Ölkanister enthält typischerweise 1 bis 5 Liter Öl und wiegt entsprechend auch so viele Kilos. Ein solches Gewicht ist in der Praxis ein zusätzliches Erschwernis, um den Eingiessvorgang kontrolliert einzuleiten und aufrecht zu erhalten. Abhilfe schafft man sich mit dem Ausguss über die Breitseite des Ölkanisters anstatt über seine Schmalseite, obwohl seine Beschaffenheit nicht dazu vorgesehen ist. Wird der Ölkanister nämlich über seine Breitseite geneigt, muss mit dem Anfang des Ausguss-Strahls ebenfalls der Einfüllstutzen getroffen werden, was oftmals nicht richtig gelingt, obwohl dann der Ausgiess-Stutzen etwas näher an den Einfüllstutzen gebracht werden kann.

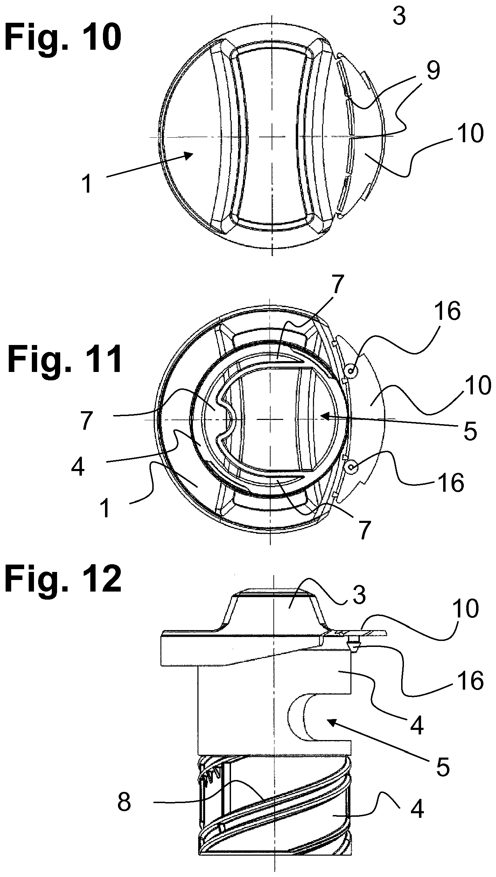

Ein weiterer Nachteil beim Ausgiessen eines solchen Ölkanisters über einen offenen Kanisterstutzen liegt darin, dass bei zu starker Neigung des Kanisters der Ölstrahl den ganzen Querschnitt des Ausgiess-Stutzens einnimmt und die Luft zur Belüftung des Kanisters dann nur stossweise in den Kanister nachströmt, was zur Folge hat, dass der Ölstrahl unregelmässig stark wird, weil aufeinanderfolgende Schwälle erzeugt werden. Im Ergebnis schwappt oder schwenkt der Ölstrahl über einen gewissen Bereich hin und her. Dies bewirkt oftmals ein Verschütten von Öl neben den Einfüllstutzen. Ein weiterer Nachteil der herkömmlichen Ausgiess-Stutzen liegt darin, dass das Unterbrechen des Eingiessens meistens einen Tropfen am Rand des Behälterstutzens zurücklässt, der nach aussen abtropft oder an der Aussenseite des Behälterstutzens an demselben nach unten läuft und schliesslich Öl über die Behälteraussenseite rinnt und man sich damit die Hände verschmutzt. Die EP 1 283 175 zeigt einen Ausgiessverschluss für den Stutzen eines Kanisters. Dieser besteht aus einem zylindrischen fixen Teil 2 als Stutzenaufsatz, sowie einem zugehörigen mobilen Stück 3 als Verschlussdeckel, ab dem ein Rohr 29 nach unten dichtend in den Stutzenaufsatz 2 führt. Das Rohr 29 weist zwei diametrale Fenster 32,32' auf, und der Stutzenaufsatz 2 auf einer Seite eine Ausgussöffnung 20 und diametral zu derselben eine Lufteintrittsöffnung 22, die in einen nach unten in den Behälter führenden Kanal führt. Durch axiales Verschieben des mobilen Teil 3 am fixen Teil 2 kann das Fenster 32 über die Ausgussöffnung 20 verschoben werden, und gleichzeitig das zweite Fenster 32' über die Lufteintrittsöffnung 22. Dann kann ausgegossen werden, wobei diametral gegenüber zum Ausgleich Luft durch das Fenster 32' und die Lufteintrittsöffnung 22 in den Behälter eintreten kann. Ein Ausgiessen kann wie in Figur 11 ersichtlich aber nur immer an einer einzigen Umfangsstelle des Ausgiessverschluss erfolgen. Die EP 1 746 041 ist ähnlich aufgebaut. Ein Verschlussdeckel 3 ist in einem Grundkörper 2 rotierbar und dichtend eingesetzt. In einer ersten Drehstellung schliesst der Verschlussdeckel den Verschluss, in einer zweiten Drehstellung gibt er den Durchfluss frei, indem eine Öffnung 3d am Verschlussdeckel über einen Ausguss 2b am Grundkörper drehbar ist und den Ausfluss freigibt. Auch mit diesem Ausgiessverschluss ist nur an einer einzigen Umfangsstelle ein Flüssigkeitsstrahl ausgiessbar, wobei die Luft oberhalb des Flüssigkeitstrahls eintritt und in den Behälter einströmt. Aus der WO 96/30273 ist eine weitere Lösung bekannt, für einen abermals ähnlichen Verschluss mit einem auf einen Behälterstutzen aufschraubbaren Element 3 mit Innengewinde und einem dieses abdichtenden und auf ihm axial zwischen zwei Stellungen verschiebbaren Element 4, dessen nach unten ragender Rohrabschnitt (Jupe) diametral zueinander angeordnete Ausnehmungen (echancrures) 24 aufweist. Wenn das Element 4 ein stückweit aus dem Element 3 axial herausgezogen wird, so befindet sich die eine Ausnehmungen 24 über einer Ausgiessöffnung 14 am Element 3 und die andere, diametral gegenüberliegenden Ausnehmung 24 über einem Lufteintrittsloch 16. In dieser ausgezogenen Stellung kann Flüssigkeit an einer einzigen Umfangsstelle des Verschlusses ausgegossen werden, während durch die gegenüberliegende Luft in den Behälter strömen kann. Und die WO 2006/008285 offenbart einen Behälterverschluss mit einem auf einen Behälterstutzen aufprellbaren unteren Teil 11 mit einem rohrförmigen, nach oben ragenden zylindrischen Teil 10 mit radialer Ausgiessöffnung 16. An oberen Teil ist ein zylindrischer Teil 20 angeformt, der sich dichtend in den nach oben ragenden zylindrischen Teil 10 hinunter erstreckt, und der unten einen gegenüber der Drehachse schiefwinkligen Rohrabschluss aufweist. Wenn die tiefste Stelle des Rohrabschlusses über der Ausgiessöffnung 16 liegt, ist der Behälterverschluss geschlossen. Wird der obere Teil mit seinem zylindrischen Teil 20 gedreht, so wird der jeweils über der Ausgiessöffnung 16 liegende Rohrabschnitt immer kürzer und gibt ihn allmählich frei. Bei einer Verdrehung um 180° ist die Ausgiessöffnung 16 vollständig freigelegt. Auch dieser Verschluss erlaubt ein Ausgiessen nur an einer einzigen Umfangsstelle. Keiner dieser Ausgiessverschlüsse ermöglicht ein Ausgiessen an beliebigen Stellen in einem Bereich von annährend 180° seines Umfanges.

Die Aufgabe der vorliegenden Erfindung ist es deshalb, einen Ausgiessverschluss für den Stutzen eines Kanisters oder beliebigen Behälters zum kontrollierten mehrseitigen bzw. isotropen Ausgiessen aus dem Kanister oder Behälter zu schaffen, der alle die oben erwähnten Nachteile beseitigt. Mit dieser Vorrichtung soll das Ausgiessen eines kontrollierten Strahls sichergestellt werden. Kontrolliertes Ausgiessen erfordert, dass der Strahl in gleichbleibender Stärke austritt und jegliches Auftreten von Schwällen und jedes Schwappen wirksam vermieden wird, indem eine stetige Luftzufuhr in den Kanister oder Behälter gewährleistet ist, wobei das ausströmende Flüssigkeitsvolumen die Menge der einströmenden Luft zum Ausgleichen und Halten des Innendrucks des Kanisters oder Behälters niemals übersteigen darf. Darüber hinaus soll das Ausgiessen eines solchen gleichförmigen Strahls über beliebige Seiten der vorderen Umfanghälfte des Ausgiess-Stutzens ermöglicht werden, und schliesslich soll das Ausgiessen auch jederzeit tropfenfrei beendet werden können.

Diese Aufgabe wird gelöst von einem Ausgiessverschluss für den Stutzen eines Kanisters, Behälters oder Rohres, bestehend aus einem Stutzenaufsatz sowie einem zugehörigen Verschlussdeckel als Strahlbilder, wobei ein sich am Verschlussdeckel nach unten erstreckendes Rohr dichtend in den rohrförmigen Kanal im Innern des Stutzenaufsatzes führt und ein Fenster als Ausgiessmündung aufweist, welches sich mindestens um einen Teil des Rohrumfangs erstreckt und im geschlossenen Zustand des Ausgiessverschlusses an der Innenwand des Kanals dichtend anliegt, wobei der Verschlussdeckel im Stutzenaufsatz axial ausfahrbar ist, bis sein Fenster über dem oberen Rand des Stutzenaufsatzes liegt und dann als Ausgussmündung und Strahlbilder wirkt, und der sich dadurch auszeichnet, dass das seitliche Fenster im Rohr sich um einen Umfangsbereich von wenigstens etwa 90° des Rohrumfanges erstreckt und der restliche Rohrumfang doppelwandig ausgeführt ist, sodass im restlichen Rohrumfang des Rohrs oder innerhalb oder ausserhalb des Kanals koaxial oder parallel versetzt zum Kanal befindlich mindestens ein Luftkanal gebildet ist, der am unteren Ende des Rohres nach aussen mündet und im oberen Bereich des Fensters seitlich auf einer Seite oder beidseits desselben ebenfalls nach aussen mündet, sodass ein kontrolliertes mehrseitiges Ausgiessen ermöglicht ist. Dieser Ausgiessverschluss ermöglicht als Besonderheit nebst allen anderen Vorteilen ein Ausgiessen an beliebigen Stellen in einem Bereich von annährend 180° seines Umfanges. Trotzdem ist stets ein Einströmen von Luft von oberhalb des Ausgabestrahls sichergestellt.

In den Figuren ist eine vorteilhafte Ausführung dieses Ausgiessverschlusses als Beispiel in verschiedenen Abbildungen dargestellt. Anhand dieser Figuren wird der Ausgiessverschluss nachfolgend beschrieben und seine Funktion wird erklärt.

Es zeigt:
- Figur 1 :: Den zusammengesetzten Ausgiessverschluss in geschlossenem Zustand;
- Figur 2 :: Den zusammengesetzten Ausgiessverschluss in geöffnetem Zustand;
- Figur 3 :: Den zusammengesetzten Ausgiessverschluss in geschlossenem Zustand in einem Schnitt längs seiner Rotationsachse;
- Figur 4 :: Den zusammengesetzten Ausgiessverschluss in geöffnetem Figur 5 : Zustand in einem Schnitt längs seiner Rotationsachse; Den Stutzenaufsatz von der Seite her gesehen;
- Figur 6 :: Den Verschlussdeckel von oben gesehen;
- Figur 7 :: Den Stutzenaufsatz in einer Ansicht von unten;
- Figur 8 :: Den Stutzenaufsatz von schräg oben gesehen;
- Figur 9 :: Den Stutzenaufsatz von schräg unten gesehen;
- Figur 10 :: Den Verschlussdeckel von oben gesehen, mit intakter Erstöffnungsgarantie;
- Figur 11 :: Den Verschlussdeckel von unten gesehen, mit intakter Erstöffnungsgarantie;
- Figur 12 :: Den Verschlussdeckel von der Seite her gesehen;
- Figur 13 :: Den Verschlussdeckel von vorne gesehen;
- Figur 14 :: Den Verschlussdeckel von hinten gesehen;
- Figur 15 :: Den Verschlussdeckel von hinten und schräg oben gesehen;
- Figur 16 :: Den Verschlussdeckel von vorne und schräg oben gesehen;
- Figur 17 :: Den Verschlussdeckel von vorne und schräg unten gesehen;
- Figur 18 :: Den Verschlussdeckel von hinten und schräg unten gesehen;
- Figur 19 :: Den Verschlussdeckel in einem Schnitt längs der Rotationsachse und längs des Griffbalkens auf seiner Oberseite;
- Figur 20 :: Den Verschlussdeckel in einem Schnitt längs der Rotationsachse und quer zum Griffbalken auf seiner Oberseite;
- Figur 21 :: Den Verschlussdeckel in einem Teilschnitt, der Einblick ins Innere gewährt;
- Figur 22 :: Den Ausgiessverschluss längs der Tropflippe quer aufgeschnitten;
- Figur 23 :: Den Ausgiessverschluss längs der Tropflippe quer aufgeschnitten, bei um 180° darin gedrehtem Verschlussdeckel.

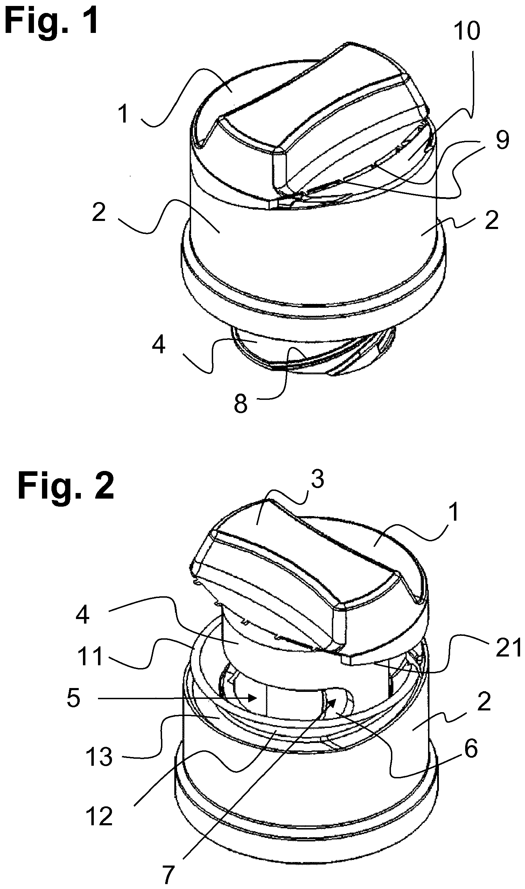

Die Figur 1 zeigt den Ausgiessverschluss in zusammengesetztem, geschlossenen Zustand, wie er auf den Stutzen eines Behälters oder Kanisters aufgesetzt ist. Der Verschluss besteht aus zwei Spritzteilen, einem Verschlussdeckel 1 und darunter einem Stutzenaufsatz 2, der auf den Stutzen eines auszurüstenden Kanisters aufgesetzt wird und in gleicher Weise auf jeglichen geeigneten Behälterstutzen aufgesetzt werden kann. Die Figur 2 zeigt den Ausgiessverschluss in geöffnetem Zustand. Zum Öffnen wird der Verschlussdeckel 1 im gezeigten Beispiel gegenüber dem Stutzenaufsatz 2 von oben gesehen im Gegenuhrzeigersinn gedreht, wodurch er infolge der steilen Gewindeverbindung mit dem Stutzenaufsatz 2 nach oben bewegt wird. Dadurch wird der Ausströmkanal freigegeben sowie auch der Lüftungskanal zum gleichzeitigen Belüften des Kanister-Innern, wie das anhand weiterer Figuren im Folgenden noch klar wird. Zum Drehen des Verschlussdeckels 1 ist auf dessen Oberseite ein Griffbalken 3 ausgeformt. Am Verschlussdeckel 1 erstreckt sich ein Rohr 4 nach unten, wobei dieses Rohr 4 ein Fenster 5 aufweist, das um annährend 180° des Umfanges aus dem Rohr 4 ausgeschnitten ist. Auf der Innenseite dieses Rohres 4 ist eine weitere innere Wand 6 eingebaut, sodass das Rohr im hinteren Bereich doppelwandig ausgeführt ist. Der Bereich zwischen der Rohrwand und der inneren Wand 6 dient als Lüftungskanal, wie das noch im Einzelnen beschrieben wird. Das Rohr 4 erstreckt sich nach unten dichtend in ein Rohr, das im Innern des Stutzenaufsatzes 2 gebildet ist. Das Rohr 4 ist in Figur 1 - das heisst im geschlossenen Zustand des Ausgiessverschlusses - unten aus dem Stutzenaufsatz 2 herausragend einsehbar. Dort erkennt man auch das steile Gewinde 8 an der Aussenwand dieses Rohres 4. In Figur 1 erkennt man ausserdem am Verschlussdeckel 1 einige dünne Materialbrücken 9 als Sollbruchstellen. Beim erstmaligen Öffnen des Ausgiessverschlusses durch Drehen des Verschlussdeckels 1 auf dem Stutzenaufsatz 2 brechen diese Materialbrücken 9 und der Verschlussdeckel 1 kann weiter in Öffnungsrichtung gedreht werden. Damit ist eine Erstgarantie-Einrichtung gebildet. Die etwa halbmondförmige Platte 10 jenseits der Materialbrücken 9 gehört zum Stutzenaufsatz 2 und bleibt stets an demselben bzw. mit demselben verbunden. Zu erwähnen ist auch die Tropflippe 11 am Stutzenaufsatz 2, die in Figur 2 erkennbar ist, wie auch der untere äussere Rand 21 am Verschlussdeckel 1. Die Tropflippe 11 ist durch eine scharfe Auskragung gebildet, unterhalb derer der Stutzenaufsatz 2 durch eine schräg nach unten führende Wand etwas verjüngt ist, und am unteren Ende der Verjüngung 12 wird dadurch eine Schulter 13 gebildet.

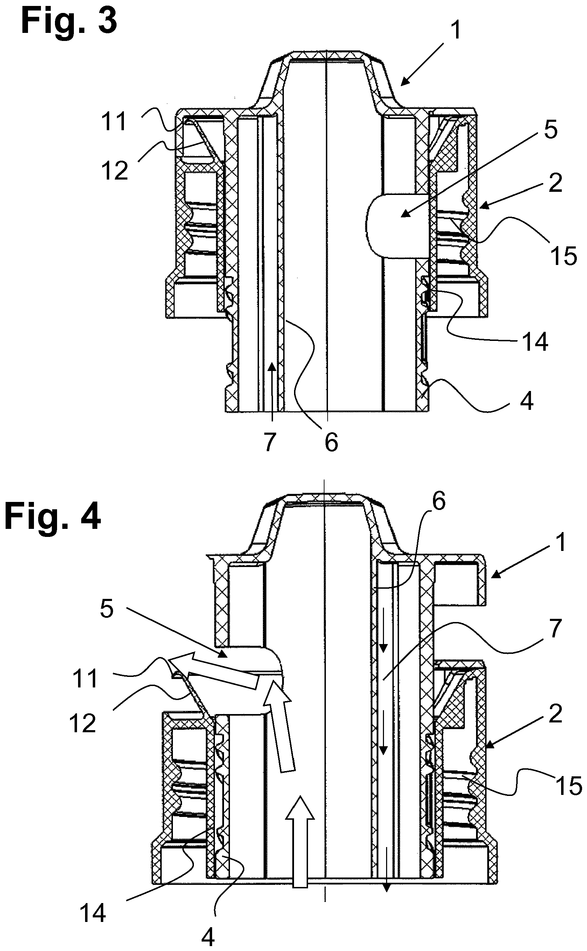

Der Aufbau des ganzen Ausgiessverschlusses wird anhand der Schnittzeichnung gemäss Figur 3 ersichtlich. Sie zeigt den zusammengesetzten Ausgiessverschluss in geschlossenem Zustand in einem Schnitt längs seiner Rotationsachse. Die Teile mit feiner Kreuzschraffur gehören zum Stutzenaufsatz 2, während jene mit der gröberen Kreuzschraffur zum Verschlussdeckel 1 gehören. Der Verschlussdeckel 1 ist in den Stutzenaufsatz 2 eingesetzt. Der Stutzenaufsatz 2 bildet in seinem Innern ein Rohr 14 von etwas kleinerem Durchmesser als der äussere Durchmesser des Stutzenaufsatzes 2. In diesem Rohr 14 steckt das Rohr 4 des Verschlussdeckels 1 dichtend. Sein Fenster 5 liegt hier - das heisst in geschlossenem Zustand des Ausgiessverschlusses - gegenüber der Innenwand des Rohrs 14 am Stutzenaufsatz 2. Das Fenster 5 ist damit abgedichtet, weil das Rohr 4 dichtend im Rohr 14 steckt. Das innere Rohr 4 am Verschlussdeckel 1 ist beidseits des Fensters 5 unter auf der ihm gegenüberliegenden Seite doppelwandig ausgeführt, indem eine weitere innere Wand 6 vorhanden ist, sodass zwischen der Aussenseite dieser Wand 6 und der Innenseite des Rohrs 4 ein Zwischenraum gebildet ist, welcher einen Luftkanal 7 bildet, und dieser Luftkanal umfasst also das Innere des Rohres 4 um etwa 180°. Als Alternative zu einer doppelwandigen Ausführung des Rohres 4 kann an dessen Innenwand auch ein axial verlaufender Luftkanal angeformt sein, zum Beispiel in Form eines angeformten halbkreisförmigen Kännels oder eines U-Profils, und das gegenüber der Mitte der Tropflippe 11 und zunächst den beiden Seiten des Fensters 5. Diese Luftkanäle münden dann ebenfalls unten am Ende des Rohres 4 sowie oben beidseits und oberhalb des Fensters 4.

Die Figur 4 zeigt den zusammengesetzten Ausgiessverschluss in geöffnetem Zustand in einem Schnitt längs seiner Rotationsachse. Im Vergleich zur Figur 3 ist jetzt der Verschlussdeckel 1 um 180° im Gegenuhrzeigersinn verdreht worden. Aufgrund des steilen Gewindes 8 an der Aussenwand des Rohres 4 hat sich der Verschlussdeckel 1 dabei aus dem Stutzenaufsatz 2 nach oben geschraubt. Das Fenster 5 wurde daher um 180° verdreht und liegt in der Figur 4 auf der jetzt linken Seite der Abbildung und ist in dieser Lage oberhalb des oberen Randes des innern Rohres 14 am Stutzenaufsatz 2 positioniert. Dadurch ist der Ausströmkanal freigegeben, wodurch Flüssigkeit oder auch rieselfähiges Schüttgut von unten längs der eingezeichneten breiten Pfeile durch das Fenster 5 austreten kann, wenn der Kanister mit dem Ausgiessverschluss in eine Ausgiesslage geneigt wird. In dem Masse, wie Flüssigkeit ausgegossen wird oder Schüttgut herausrieselt, strömt Luft von aussen durch den Lüftungskanal 7 ins Innere des Kanisters, in der Figur 4 mit dünnen Pfeilen eingezeichnet. Der Verschlussdeckel 1 wirkt zunächst als Verschluss, indem dieser Verschlussdeckel 1 dieses nach unten sich erstreckende Rohr 4 bildet, welches dichtend in den Kanal bzw. das Rohr 14 am Stutzenaufsatz 2 einpasst und den Ausgiessverschluss bei auf den Stutzenaufsatz 2 abgesenktem Verschlussdeckel 1 dichtend verschliesst. In geöffnetem Zustand wirkt der Verschlussdeckel 1 als Strahlbilder, indem sein sich nach unten erstreckendes Rohr 4 das seitliche Fenster 5 aufweist, welches sich um wenigstens 90° des Rohrumfanges erstreckt, und wobei der restliche Rohrumfang doppelwandig ausgeführt ist, indem das Rohr 4 dort in seinem Innern diese weitere Rohrwand 6 bildet. Der Innenraum zwischen den beiden Rohrwänden und damit der von ihm gebildete Luftkanal 7 mündet am unteren Ende des Rohres 4 in axialer Richtung nach aussen, und im oberen Bereich des Fensters 5 mündet er beidseits des Fensters nach vorne ebenfalls nach aussen. Die Wirkung dieses Luftkanals 7 beim Ausgiessen und der damit erzielte Effekt wird anhand der Figur 11 genauer beschrieben.

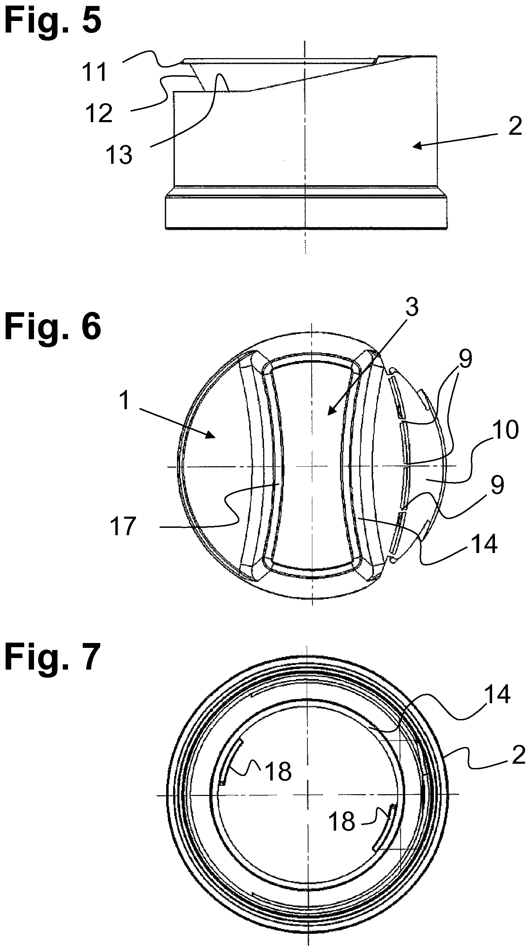

Zunächst zeigt die Figur 5 den Stutzenaufsatz 2 von der Seite her gesehen. Hier erkennt man die Ausgestaltung der Tropflippe 11 sowie der sich um etwa 2 bis 5mm verjüngenden Wand 12, wodurch unterhalb der Tropflippe 1 eine Schulter 13 gebildet ist. Der ganze weggeschnittene Bereich auf der Oberseite des Stutzenaufsatzes 2 wird vom aufgeschraubten Verschlussdeckel 1 ausgefüllt, welcher sodann in geschlossenem Zustand des Ausgiessverschlusses mit seinem unteren Rand 21 satt auf der Schulter 13 ruht.

In Figur 6 ist der Verschlussdeckel 1 von oben gesehen dargestellt. Man erkennt den diametral angeordneten Griffbalken 3 mit seinen beiden, einander gegenüberliegenden, leicht bombierten Griffflächen 17, mit denen der Griffbalken 3 zwischen Daumen und gekrümmtem Zeigefinger eingeklemmt und hernach gedreht werden kann. Das erstmalige Öffnen des Verschlusses bzw. das erstmalige Drehen des Verschlussdeckels 1 am noch geschlossenen Ausgiessverschluss kann nur durch das Brechen der Materialbrücken 9 erfolgen, wonach sich der Verschlussdeckel 1 von der zum Stutzenaufsatz 2 gehörigen Platte 10 weg nach oben dreht.

Die Figur 7 zeigt den Stutzenaufsatz 2 in einer Ansicht von unten. Man erkennt hier zwei Gewindeführungen 18 an der Innenwand des Rohres 14, an denen das steile Gewinde 8 an der Aussenwand des Rohres 4 am Verschlussdeckel 1 eine Führung findet.

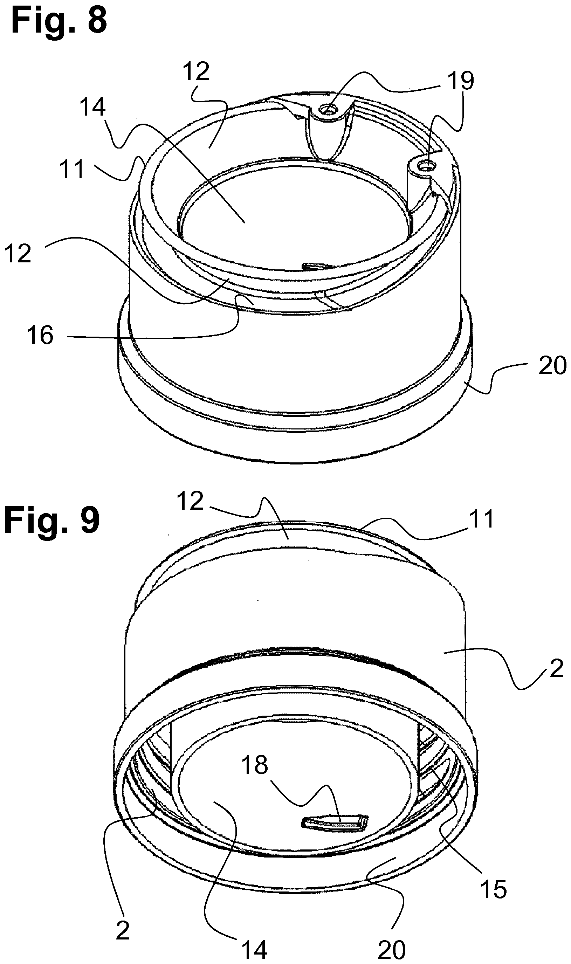

Die Figur 8 zeigt den Stutzenaufsatz 2 gesondert von schräg oben gesehen. In dieser Ansicht erkennt man das inliegende Rohr 14 und einer der Gewindeführungen 18 ist erkennbar. Des Weiteren sieht man die Tropflippe 11 mit der nach unten ansetzenden Verjüngung 12, durch die eine Schulter 16 unterhalb der Verjüngung 12 gebildet ist. Der Tropflippe 11 diametral gegenüber liegt ein Bereich mit zwei Buchsen 19. In diese Buchsen sind Einrastkegel einrastbar, die auf der Unterseite der Platte 10 angebracht sind. Sie kommen bei der Montage des Ausgiessverschlusses zum Tragen. Für diese werkseitige Montage wird der Verschlussdeckel 1 in den Stutzenaufsatz 2 eingeschraubt. Zuletzt wird die Platte 10 für die Erstöffnungsgarantie, welche über die Materialbrücken 9 mit dem Verschlussdeckel 1 verbunden ist, mittels ihrer Einrastkegel in diesen Buchsen 19 fest und unlösbar verbunden, sodass die Platte 10 selbst bei einem Bruch der Materialbrücken 9 fest mit dem Stutzenaufsatz 2 verbunden bleibt.

Die Figur 9 zeigt den Stutzenaufsatz 2 noch von schräg unten gesehen. In dieser Darstellung sind die Gewindeführungen 18 an der Innenwand des Rohres 14 einsehbar. An der Innenwand des sonstigen Stutzenaufsatzes 2 ist ein Gewinde 15 angeformt, mittels dessen der Stutzenaufsatz in diesem Beispiel auf einen Gewindestutzen eines Kanisters oder Behälters aufschraubbar ist. Längs des unteren Randes erstreckt sich ein Garantieband 20, das beim erstmaligen Aufschrauben über einen Wulst am Gewindestutzen des Kanisters gedrückt wird und hernach an diesem einrastet, sodass der Stutzenaufsatz 2 nicht mehr vom Gewindestutzen losschraubbar ist.

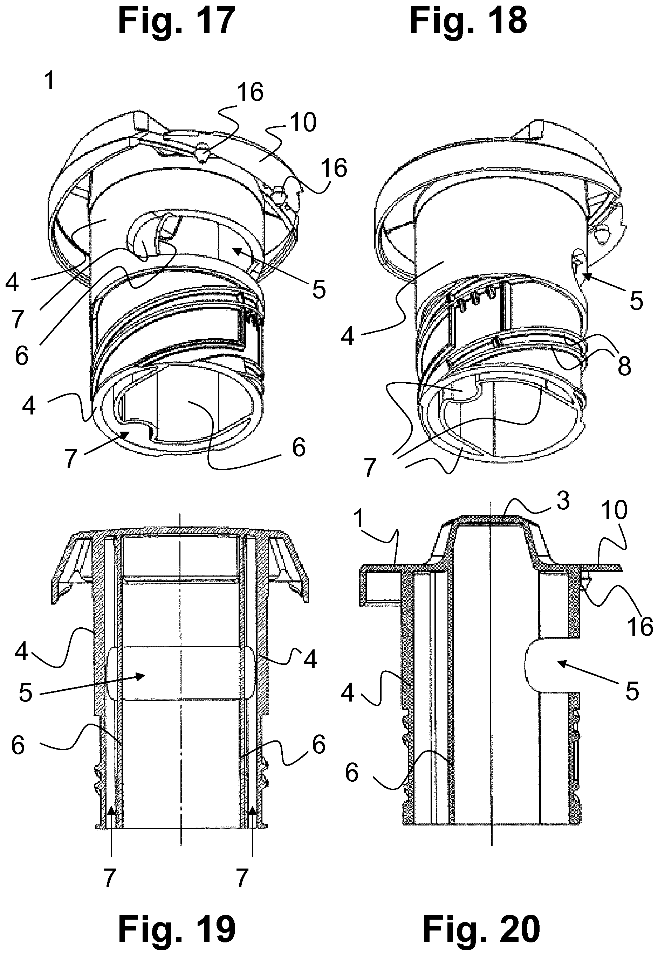

Die Figuren 10 bis 20 zeigen allesamt den Verschlussdeckel in verschiedenen Ansichten, zunächst in Figur 10 von oben gesehen mit intakter Erstöffnungsgarantie. Die Platte 10 ist über eine Anzahl Materialbrücken 9 als Sollbruchstellen mit dem Verschlussdeckel 1 verbunden. Die Figur 11 zeigt den Verschlussdeckel 1 von unten gesehen mit intakter Erstöffnungsgarantie. Hier erkennt man die Einrastkegel 16 an der unteren Seite der Platte 10, die im Zuge des erstmaligen werkseitigen Zusammensetzens von Verschlussdeckel 1 und Stutzenaufsatz 2 in die Buchsen 19 eingerastet werden. Im Besonderen sieht man in dieser Darstellung die Ausgestaltung der Wandung des Rohres 4, das sich im Innern des Verschlussdeckels 1 nach unten erstreckt. Auf der Innenseite dieses Rohres 4 ist eine weitere Wand 6 angeformt, sodass zwischen der Aussenseite dieser Wand 6 und der Innenwand des Rohres 4 ein Zwischenraum als Luftkanal 7 gebildet ist. Dieser Luftkanal 7 mündet am unteren Ende des Rohres in axialer Richtung. Durch diesen Luftkanal 7 strömt beim Ausgiessen Luft von aussen in das Innere des Kanisters und strömt also durch die Mündungen am unteren Ende des Rohres 4 in den Kanister. Am oberen Ende des Rohres 4 mündet der Lufkanal 7 einzig beidseits des Fensters 5 im Rohr 4, und zwar nur im oberen Bereich beidseits dieses Fensters 5. Die Figur 12 zeigt den Verschlussdeckel 1 noch von der Seite her gesehen mit all den bereits beschriebenen Elementen. Hier erkennt man auch das steile Gewinde 8 an der Aussenseite des Rohres 4, sowie das aus der Wand des Rohres 4 ausgenommene Fenster 5, das sich um fast 180° des Rohrumfanges erstreckt. Zum Ausgiessen von Flüssigkeit aus dem mit einem solchen Ausgiessverschluss ausgerüsteten Kanister kann derselbe nach dem Öffnen des Ausgiessverschlusses durch Losdrehen des Verschlussdeckels 1 wie in Figur 2 dargestellt in Ausgiesslage geschwenkt werden. Wenn die Flüssigkeit hernach durch das Fenster 5 über die Mitte der Tropflippe 11 ausströmt, so strömt für den Druckausgleich im Kanister-Innern zeitgleich Luft von aussen durch die Öffnungen beidseits des Fensters 5 in den Luftkanal 7, und hernach durch diesen Zwischenraum längs des Rohres 4, bis sie schliesslich durch die in Figur 11 sichtbare U-förmige Mündung des Zwischenraums bzw. Luftkanals 7 in den Kanister strömt. Weil das Ausgiessrohr 4 einen gegenüber dem Stutzen des Kanisters einen reduzierten Querschnitt aufweist, wird ein gleichbleibender, verdünnter Strahl gebildet, welcher nicht schwallt, weil die für den Druckausgleich im Kanister nötige Luft stets nachströmen kann, egal über welche Stelle der Tropflippe 11 die Flüssigkeit gerade ausgegossen wird. So kann über die Mitte der Tropflippe 11 ausgegossen werden. Andererseits kann auch auf dem Umfang um 90° verschoben über die Tropflippe 11 ausgegossen werden. Das wäre der Fall, wenn die Flüssigkeit über eine Seitenbegrenzung des Fensters 5 ausgegossen würde. Dann strömt die Luft für den Druckausgleich auf der gegenüberliegenden Seite des Fensters 5 durch die dortige Öffnung in den Lüftungskanal 7 bzw. Zwischenraum. Folglich ist in jeder Ausgiesslage für einen hinreichenden Druckausgleich im Kanister gesorgt. Dadurch wird der Strahl stationär und gleichförmig. Dies ist erforderlich, um ein kontrolliertes Ausgiessen sicherzustellen. Ungeachtet dessen, ob man den Kanister mehr oder weniger steil gekippt ausgiesst wird stets ein kontrollierter Ausgiessstrahl erzeugt. Beim Absetzen des Ausgiessens bleibt zudem kein Tropfen auf der Aussenseite der Tropflippe 11 hängen. Vielmehr reisst der Ausgiess-Strom scharf ab und jegliche Restflüssigkeit an der Tropflippe 11 strömt aufgrund der Kapillarwirkung zurück in den Kanister.

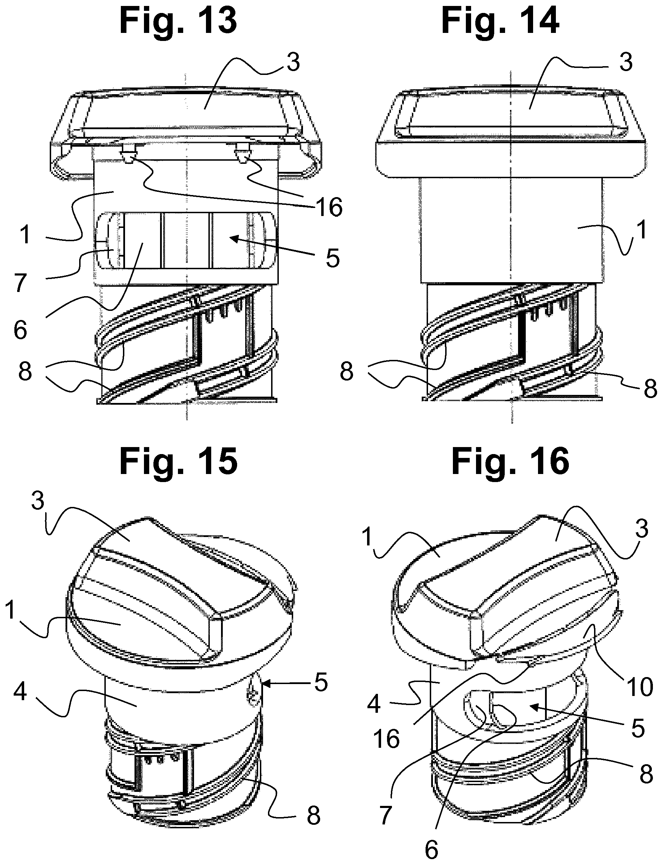

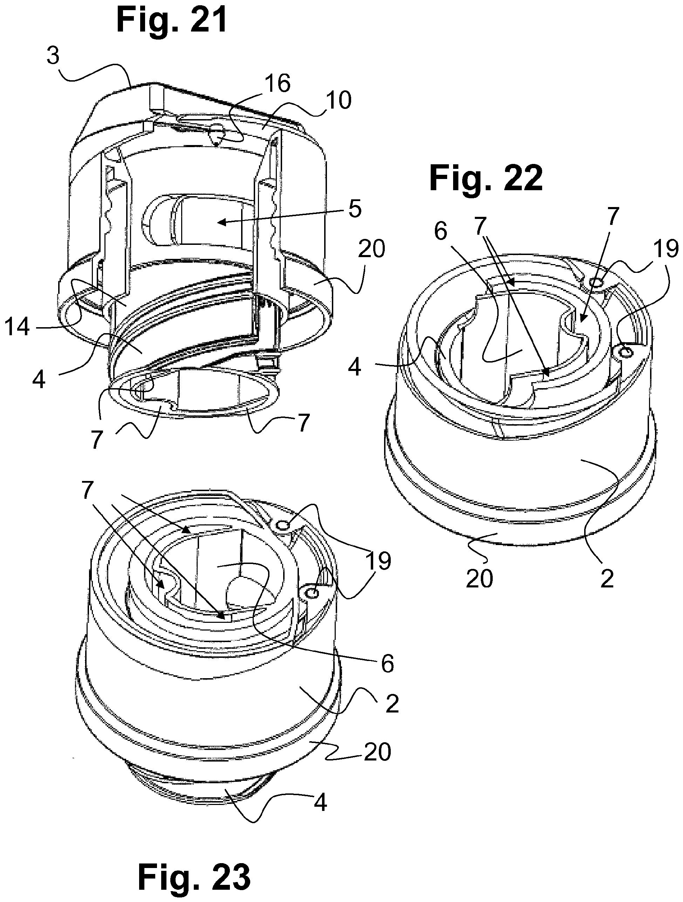

Die Figuren 13 bis 20 illustrieren diesen Ausgiessverschluss aus Verschlussdeckel 1 und Stutzenaufsatz 2 mit weiteren Abbildungen, wovon die Figuren 21 und 23 Teilschnitte oder Schnitte durch den zusammengesetzten Ausgiessverschluss darstellen, zum besseren Verständnis des inneren Aufbaus der Teile.

Dieser Ausgiessverschluss kann in verschiedenen Varianten realisiert werden. Statt einer Gewindeverbindung kann der Verschlussdeckel 1 auch so ausgeführt sein, dass er wie ein Push-Pull-Verschluss aus dem Stutzenaufsatz 2 ausziehbar ist und sowohl in der geschlossenen Position wie auch in der geöffneten leicht einrastet. In diesem Fall ist am Verschlussdeckel 1 an seinem sich nach unten erstreckenden Rohr 4 mindestens eine axiale Führungsrippe oder eine Führungsnute vorhanden, welche in Eingriff mit wenigstens einer dazu passenden Führungsnute oder Führungsrippe an der Innenwand des Kanals 14 am Stutzenaufsatz 2 bringbar ist. Der Kanal 14 bzw. das in ihn einpassende Rohr 4 am Verschlussdeckel 1 kann sowohl kreisrund wie auch oval oder mit anderen Querschnittsformen gestaltet sein, und es braucht im Falle einer Push-Pull-Version auch nicht zwingend konzentrisch um Verschlussdeckel und Stutzenaufsatz angeordnet zu sein. Wichtig ist, dass sich der Lüftungskanal um mindestens 90°, besser jedoch um 180° des Ausgiessrohres oder -kanals, als ein im Querschnitt bananenförmiger Kanal erstreckt. Bei einer Umfassung des Ausgiesskanals um 180° sind zwei Ansaugöffnungen beidseits des Fensters in dessen oberen Bereich gebildet. Nur mit einem solchen, den Ausgiesskanal um mindestens 90°, besser aber um 180° umschliessenden Lüftungskanal 7 ist sichergestellt, dass in jeder Ausgiesslage hinreichend Luft in den Kanister einströmen kann, um einen stetigen Druckausgleich zu ermöglichen. Letzteres aber ist entscheidend dafür, dass der ausgegossene Flüssigkeitsstrahl keinen Schwall bildet, sondern gleichförmig und gleichmässig mit kontrollierbarer Strahldicke ausströmt.

Aus der Beschreibung und den beiliegenden Figuren erschliesst sich, dass dieser Ausgiessverschluss für alle denkbaren Gebinde geeignet ist, die mit einem Stutzen versehen sind und die für das Ausgeben der Flüssigkeit oder auch eines Schüttgutes gekippt werden.

### Ziffernverzeichnis

- 1: Verschlussdeckel
- 2: Stutzenaufsatz
- 3: Griffbalken am Verschlussdeckel
- 4: Rohr am Verschlussdeckel
- 5: Fenster im Rohr 4
- 6: Innenwand im Rohr 4
- 7: Lüftungskanal, Innenraum
- 8: Steiles Gewinde am Rohr 4
- 9: Materialbrücken als Sollbruchstellen
- 10: Platte mit Materialbrücken 9
- 11: Tropflippe
- 12: Verjüngung unterhalb der Tropflippe
- 13: Schulter unter der Tropflippe
- 14: Kanal in Stutzenaufsatz
- 15: Gewinde an Kappe des Stutzenaufsatzes
- 16: Einrastkegel an Platte 10
- 17: Griff-Fläche am Griffbalken 3
- 18: Gewindeführung an der Innenseite des Kanals 14
- 19: Einrastlöcher
- 20: Garantieband unten an Stutzenaufsatz
- 21: Unterer Rand des Verschlussdeckels

## Patentansprüche

1. Ausgiessverschluss für den Stutzen eines Kanisters, Behälters oder Rohres, bestehend aus einem Stutzenaufsatz (2) sowie einem zugehörigen Verschlussdeckel (1) als Strahlbilder, wobei ein sich am Verschlussdeckel (1) nach unten erstreckendes Rohr (4) dichtend in den rohrförmigen Kanal (14) im Innern des Stutzenaufsatzes (2) führt und ein Fenster (5) als Ausgiessmündung aufweist, welches sich mindestens um einen Teil des Rohrumfangs erstreckt und im geschlossenen Zustand des Ausgiessverschlusses an der Innenwand des Kanals (14) dichtend anliegt, wobei der Verschlussdeckel (1) im Stutzenaufsatz (2) axial ausfahrbar ist, bis sein Fenster (5) über dem oberen Rand des Stutzenaufsatzes (2) liegt und dann als Ausgussmündung und Strahlbilder wirkt, ***dadurch gekennzeichnet,* dass** das seitliche Fenster (5) im Rohr (4) sich um einen Umfangsbereich von wenigstens etwa 90° des Rohrumfanges erstreckt und der restliche Rohrumfang doppelwandig ausgeführt ist, sodass im restlichen Rohrumfang des Rohrs (4) oder innerhalb oder ausserhalb des Kanals (14) koaxial oder parallel versetzt zum Kanal (14) befindlich mindestens ein Luftkanal (7) gebildet ist, der am unteren Ende des Rohres (4) nach aussen mündet und im oberen Bereich des Fensters (5) seitlich auf einer Seite oder beidseits desselben ebenfalls nach aussen mündet, sodass ein kontrolliertes mehrseitiges Ausgiessen ermöglicht ist.

2. Ausgiessverschluss für den Stutzen eines Kanisters oder Behälters nach Anspruch 1, ***dadurch gekennzeichnet,* dass** im restlichen Rohrumfang des Rohrs (4) mindestens ein Luftkanal (7) gebildet ist, indem dieser restliche Rohrumfang ausserhalb des Fensters (5) doppelwandig ausgeführt ist, indem das Rohr (4) dort in seinem Innern eine weitere Rohrwand (6) bildet, wobei der Innenraum zwischen den beiden Rohrwänden als Luftkanal (7) am unteren Ende des Rohres (4) in axialer Richtung nach aussen mündet und nur im oberen Bereich des Fensters (5) seitlich beidseits desselben ebenfalls nach aussen mündet, sodass ein kontrolliertes mehrseitiges Ausgiessen ermöglicht ist.

3. Ausgiessverschluss für den Stutzen eines Kanisters oder beliebigen Behälters nach einem der Ansprüche 1 bis 2, ***dadurch gekennzeichnet,* dass** der Stutzenaufsatz (2) mit seiner oberen Aussenkante eine Tropflippe (11) bildet, indem diese Aussenkante eine scharfe Auskragung bildet, unterhalb derer der Stutzenaufsatz (2) durch eine schräg nach unten führende Wand verjüngt ist, und am unteren Ende der Verjüngung (12) dadurch eine Schulter (13) gebildet ist.

4. Ausgiessverschluss für den Stutzen eines Kanisters oder beliebigen Behälters nach einem der Ansprüche 1 bis 3, ***dadurch gekennzeichnet,* dass** der Stutzenaufsatz (2) eine Kappe mit Innengewinde (15) bildet, zum Aufschrauben auf das Aussengewinde eines zu bestückenden Kanisterstutzens.

5. Ausgiessverschluss für den Stutzen eines Kanisters oder beliebigen Behälters nach einem der vorangehenden Ansprüche, ***dadurch gekennzeichnet,* dass** der Stutzenaufsatz (2) eine Kappe mit Rastmitteln an seiner Innenseite bildet, zum einrastenden Einklicken an den Rastmitteln an einem zu bestückenden Kanisterstutzen.

6. Ausgiessverschluss für den Stutzen eines Kanisters oder beliebigen Behälters nach Anspruch 5, ***dadurch gekennzeichnet,* dass** die Rastmittel an der Innenseite der Kappe aus einer längs der Umfanglinie verlaufenden Rille bestehen, zum Aufprellen über eine Umfangsrille am Kanisterstutzen oder über einen nach aussen auskragenden Rand an der Kanisterstutzenmündung.

7. Ausgiessverschluss für den Stutzen eines Kanisters oder beliebigen Behälters nach einem der vorangehenden Ansprüche, ***dadurch gekennzeichnet,* dass** der Verschlussdeckel (1) an seinem sich nach unten erstreckenden Rohr (4) ein Aussengewinde (8) aufweist, welches in Eingriff mit wenigstens zwei Führungsrippen (18) an der Innenwand des Kanals (14) am Stutzenaufsatz (2) bringbar ist, sodass der Verschlussdeckel (1) durch eine Drehung um 180° von einer dichtenden Lage in die Ausgiesslage bringbar ist, in welcher ein Flüssigkeitsstrahl in jeder Richtung zwischen nach vorne bis auf die beiden um 90° abgewandten Seiten des Ausgiessverschlusses durch sein Fenster (5) über die Tropflippe (11) am Stutzenaufsatz (2) ausgiessbar ist.

8. Ausgiessverschluss für den Stutzen eines Kanisters oder beliebigen Behälters nach einem der Ansprüche 1 bis 6, ***dadurch gekennzeichnet,* dass** der Verschlussdeckel (1) an seinem sich nach unten erstreckenden Rohr (4) eine axiale Führungsrippe oder eine Führungsnute aufweist, welche in Eingriff mit wenigstens einer dazu passenden Führungsnute oder Führungsrippe an der Innenwand des Kanals (14) am Stutzenaufsatz (2) bringbar ist, sodass der Verschlussdeckel durch Anheben von einer dichtenden Lage in die Ausgiesslage bringbar ist, in welcher ein Flüssigkeitsstrahl in jeder Richtung zwischen nach vorne bis auf die beiden um 90° abgewandten Seiten des Ausgiessverschlusses durch sein Fenster (5) über die Tropflippe (11) am Stutzenaufsatz (2) ausgiessbar ist, wobei der Ausgiessverschluss in beiden Endpositionen in Rastmittel am Verschlussdeckel (1) und Stutzenaufsatz (2) einrastbar ist.

9. Ausgiessverschluss für den Stutzen eines Kanisters oder beliebigen Behälters nach einem der vorangehenden Ansprüche, ***dadurch gekennzeichnet,* dass** der Verschlussdeckel (1) im Bereich ausserhalb seines sich nach unten erstreckenden Rohres (4) mindestens einen nach unten ragenden Einrastkegel (16) an einer als Erstöffnungsgarantie wegbrechbaren Platte (10) aufweist, welcher mindestens eine Einrastkegel (16) in Schliesslage des Verschlussdeckels (1) in eine als Rastloch wirkende Buchse (19) am Stutzenaufsatz (2) einrastbar ist, und hernach der Verschlussdeckel (1) infolge dieser Einrastung nur unter Bruch mindestens einer Materialbrücke (9) als Sollbruchstelle an der Platte (10) aus der Schliesslage bringbar ist.

10. Ausgiessverschluss für den Stutzen eines Kanisters oder beliebigen Behälters nach einem der Ansprüche 1 bis 8, ***dadurch gekennzeichnet,* dass** der Verschlussdeckel (1) einen Teil einer Kreisscheibe bildet, der von oben gesehen als Erstöffnungsgarantie am Aussenteil verbleibt, und der Kreisscheibe von oben gesehen in Ausgiessposition ein Segment fehlt, sodass eine Öffnung für den Ausgiess-Strahl bei Überkopfposition frei bleibt.

11. Ausgiessverschluss für den Stutzen eines Kanisters oder beliebigen Behälters nach einem der Ansprüche 1 bis 9, ***dadurch gekennzeichnet,* dass** der Verschlussdeckel (1) an seiner Oberseite einen nach oben ragenden diametrisch über die Oberseite des Verschlussdeckels (1) verlaufenden Griffbalken (3) aufweist.

12. Ausgiessverschluss für den Stutzen eines Kanisters oder beliebigen Behälters nach einem der vorangehenden Ansprüche, ***dadurch gekennzeichnet,* dass** der Stutzenaufsatz (2) um wenigstens 180° längs seines Umfangs eine radial auskragende Tropflippe (11) bildet, welche gegenüber seinem sonstigen Radius zurückversetzt ist, und dass der Bereich unterhalb dieser Tropflippe (11) am Stutzenaufsatz (2) über eine Höhe von 2 bis 5mm verjüngt ist und am unteren Ende der Verjüngung (12) eine Schulter (16) zur passgenauen Aufnahme des entsprechend geformten unteren Randes des aufsetzbaren Verschlussdeckels (1) bildet.

## Claims

1. Pouring closure for the neck of a canister, container or tube, consisting of a neck attachment (2) and an associated closure cover (1) as jet former, wherein a tube (4) which extends downwardly on the closure cover (1) leads sealingly into the tubular channel (14) inside the neck attachment (2) and has a window (5) as pouring mouth which extends at least around a part of the tube circumference and, in the closed state of the pouring closure, lies sealingly against the inner wall of the channel (14), wherein the closure cover (1) is axially extendable in the neck attachment (2) until its window (5) is situated above the upper edge of the neck attachment (2) and then acts as a pouring mouth and jet former, ***characterized* in that** the lateral window (5) in the tube (4) extends about a circumferential region of at least approximately 90° of the tube circumference and the remaining tube circumference is of double-walled configuration, with the result that, in the remaining tube circumference of the tube (4) or inside or outside the channel (14), coaxial to or offset parallel to the channel (14), there is formed at least one air channel (7) which opens outwardly at the lower end of the tube (4) and, in the upper region of the window (5), likewise leads outwardly laterally on one side or on both sides thereof, with the result that controlled multi-side pouring is made possible.

2. Pouring closure for the neck of a canister or container according to Claim 1, ***characterized* in that** the remaining tube circumference of the tube (4) has at least one air channel (7) formed therein by virtue of this remaining tube circumference being of double-wall configuration outside the window (5) by virtue of the tube (4) forming a further tube wall (6) there in its interior, wherein the interior space between the two tube walls as an air channel (7) opens outwardly in the axial direction at the lower end of the tube (4) and, only in the upper region of the window (5), likewise opens outwardly laterally on both sides thereof, with the result that control of multi-side pouring is made possible.

3. Pouring closure for the neck of a canister or any desired container according to one of Claims 1 to 2, ***characterized* in that** the neck attachment (2), with its upper outer edge, forms a drip lip (11) by virtue of this outer edge forming a sharp projection beneath which the neck attachment (2) is tapered by a wall leading obliquely downwards, and a shoulder (13) is thereby formed at the lower end of the taper (12).

4. Pouring closure for the neck of a canister or any desired container according to one of Claims 1 to 3, ***characterized* in that** the neck attachment (2) forms a cap with an internal thread (15) for screwing onto the external thread of a canister neck to be equipped.

5. Pouring closure for the neck of a canister or any desired container according to one of the preceding claims, ***characterized* in that** the neck attachment (2) forms a cap with latching means on its inner side for snap-in latching on the latching means on a canister neck to be equipped.

6. Pouring closure for the neck of a canister or any desired container according to Claim 5, ***characterized* in that** the latching means on the inner side of the cap consist of a groove which extends along the circumferential line and is intended for snapping over a circumferential groove on the canister neck or over an outwardly projecting edge on the canister neck mouth.

7. Pouring closure for the neck of a canister or any desired container according one of the preceding claims, ***characterized* in that** the closure cover (1) has on its downwardly extending tube (4) an external thread (8) which can be brought into engagement with at least two guide ribs (18) on the inner wall of the channel (14) on the neck attachment (2), with the result that the closure cover (1) can be brought, by means of a rotation through 180°, from a sealing position into the pouring position in which a liquid jet can be poured out in any direction between a forward direction and a sideways direction, up to the two sides directed away through 90°. of the pouring closure through its window (5) via the drip lip (11) on the neck attachment (2).

8. Pouring closure for the neck of a canister or any desired container according to one of Claims 1 to 6, ***characterized* in that** the closure cover (1) has on its downwardly extending tube (4) an axial guide rib or a guide groove which can be brought into engagement with at least one complementary guide groove or guide rib on the inner wall of the channel (14) on the neck attachment (2), with the result that the closure cover, by being lifted, can be brought from a sealing position into the pouring position in which a liquid jet can be poured out in any direction between a forward direction and a sideways direction, up to the two sides directed away through 90°, of the pouring closure through its window (5) via the drip lip (11) on the neck attachment (2), wherein the pouring closure can be latched in both end positions into latching means on the closure cover (1) and neck attachment (2).

9. Pouring closure for the neck of a canister or any desired container according to one of the preceding claims, ***characterized* in that** the closure cover (1) has, in the region outside its downwardly extending tube (4), at least one downwardly projecting latching-in cone (16) on a plate (10) which can be broken away as a tamperproof facility, which at least one latching-in cone (16) can be latched, in the closed position of the closure cover (1), into a bush (19) acting as a latching hole on the neck attachment (2), and thereafter, as a result of this latching in, the closure cover (1) can be brought out of the closed position only with breakage of at least one material bridge (9) as predetermined breaking point on the plate (10).

10. Pouring closure for the neck of a canister or any desired container according to one of Claims 1 to 8, ***characterized* in that** the closure cover (1) forms a part of a circular disc which, as viewed from above, remains on the outer part as a tamperproof facility, and the circular disc, as viewed from above, lacks a segment in the pouring position such that an opening for the pouring jet remains free in the overhead position.

11. Pouring closure for the neck of a canister or any desired container according to one of Claims 1 to 9, ***characterized* in that** the closure cover (1) has on its upper side an upwardly projecting grip bar (3) which extends diametrically over the upper side of the closure cover (1).

12. Pouring closure for the neck of a canister or any desired container according to one of the preceding claims, ***characterized* in that** the neck attachment (2) forms, over at least 180° along its circumference, a radially projecting drip lip (11) which is set back with respect to its remaining radius, and **in that** the region below this drip lip (11) on the neck attachment (2) is tapered over a height of 2 to 5 mm and, at the lower end of the taper (12), forms a shoulder (16) for the precisely tailored reception of the correspondingly shaped lower edge of the attachable closure cover (1).

## Revendications

1. Bouchon verseur pour l'embout d'un bidon, d'un récipient ou d'un tuyau, constitué d'un raccord d'embout (2) ainsi que d'un couvercle de fermeture associé (1) servant de formeur de jet, un tube (4) s'étendant vers le bas au niveau du couvercle de fermeture (1) conduisant de manière étanche dans le canal tubulaire (14) à l'intérieur du raccord d'embout (2) et présentant une fenêtre (5) en tant qu'embouchure verseuse qui s'étend au moins autour d'une partie de la périphérie tubulaire et qui s'applique hermétiquement contre la paroi intérieure du canal (14) dans l'état fermé du bouchon verseur, le couvercle de fermeture (1) dans le raccord d'embout (2) pouvant être sorti axialement jusqu'à ce que sa fenêtre (5) soit située au-dessus du bord supérieur du raccord d'embout (2) et agisse ainsi en tant qu'embouchure de sortie et formeur de jet, ***caractérisé en ce que*** la fenêtre latérale (5) dans le tube (4) s'étend autour d'une région périphérique d'au moins environ 90° de la périphérie tubulaire et la périphérie tubulaire restante est réalisée avec une double paroi de telle sorte que dans la périphérie tubulaire restante du tube (4), ou à l'intérieur ou à l'extérieur du canal (14), soit formé au moins un canal d'air (7) situé coaxialement ou de manière décalée parallèlement au canal (14), lequel débouche vers l'extérieur au niveau de l'extrémité inférieure du tube (4) et débouche également vers l'extérieur dans la région supérieure de la fenêtre (5) latéralement d'un côté ou des deux côtés de celle-ci, de telle sorte que l'on puisse verser sur plusieurs côtés de manière contrôlée.

2. Bouchon verseur pour l'embout d'un bidon ou d'un récipient selon la revendication 1, ***caractérisé en ce que*** dans la périphérie tubulaire restante du tube (4) est formé au moins un canal d'air (7) par le fait que cette périphérie tubulaire restante est réalisée à l'extérieur de la fenêtre (5) avec une double paroi, par le fait que le tube (4) forme à cet endroit en son intérieur une paroi tubulaire supplémentaire (6), l'espace intérieur entre les deux parois tubulaires en tant que canal d'air (7) débouchant vers l'extérieur dans la direction axiale au niveau de l'extrémité inférieure du tube (4) et débouchant également vers l'extérieur seulement dans la région supérieure de la fenêtre (5) latéralement des deux côtés de celle-ci, de telle sorte que l'on puisse verser sur plusieurs côtés de manière contrôlée.

3. Bouchon verseur pour l'embout d'un bidon ou d'un récipient quelconque selon l'une quelconque des revendications 1 et 2, ***caractérisé en ce que*** le raccord d'embout (2) forme avec son arête extérieure supérieure une lèvre d'égouttement (11) par le fait que cette arête extérieure forme un surplomb saillant en dessous duquel le raccord d'embout (2) est rétréci par une paroi dirigée obliquement vers le bas, et à l'extrémité inférieure du rétrécissement (12) est de ce fait formé un épaulement (13).

4. Bouchon verseur pour l'embout d'un bidon ou d'un récipient quelconque selon l'une quelconque des revendications 1 à 3, ***caractérisé en ce que*** le raccord d'embout (2) forme un capuchon avec un filetage intérieur (15) pour le vissage sur le filetage extérieur d'un embout de bidon à équiper.

5. Bouchon verseur pour l'embout d'un bidon ou d'un récipient quelconque selon l'une quelconque des revendications précédentes, ***caractérisé en ce que*** le raccord d'embout (2) forme un capuchon avec des moyens d'encliquetage au niveau de son côté intérieur, pour l'emboîtement par encliquetage avec des moyens d'encliquetage sur un embout de bidon à équiper.

6. Bouchon verseur pour l'embout d'un bidon ou d'un récipient quelconque selon la revendication 5, ***caractérisé en ce que*** les moyens d'encliquetage au niveau du côté intérieur du capuchon se composent d'une rainure s'étendant le long de la ligne périphérique pour s'encliqueter sur une rainure périphérique au niveau de l'embout de bidon ou sur un bord saillant vers l'extérieur au niveau de l'embouchure de l'embout de bidon.

7. Bouchon verseur pour l'embout d'un bidon ou d'un récipient quelconque selon l'une quelconque des revendications précédentes, ***caractérisé en ce que*** le couvercle de fermeture (1) présente, au niveau de son tube (4) s'étendant vers le bas, un filetage extérieur (8) qui peut être amené en prise avec au moins deux nervures de guidage (18) au niveau de la paroi intérieure du canal (14) au niveau du raccord d'embout (2), de telle sorte que le couvercle de fermeture (1) puisse être amené par rotation de 180° d'une position d'étanchéité à la position de versement dans laquelle un jet de liquide peut être éjecté dans chaque direction entre la direction vers l'avant et jusqu'au deux côtés opposés de 90° du bouchon verseur à travers sa fenêtre (5) par le biais de la lèvre d'égouttement (11) au niveau du raccord d'embout (2) .

8. Bouchon verseur pour l'embout d'un bidon ou d'un récipient quelconque selon l'une quelconque des revendications 1 à 6, ***caractérisé en ce que*** le couvercle de fermeture (1) présente, au niveau de son tube (4) s'étendant vers le bas, une nervure de guidage axiale ou une rainure de guidage qui peut être amenée en prise avec au moins une rainure de guidage ou une nervure de guidage adaptée à celles-ci au niveau de la paroi intérieure du canal (14) au niveau du raccord d'embout (2), de telle sorte que le couvercle de fermeture puisse être amené par soulèvement d'une position d'étanchéité à la position de versement dans laquelle un jet de liquide peut être éjecté dans chaque direction entre la direction vers l'avant et jusqu'aux deux côtés opposés de 90° du bouchon verseur à travers sa fenêtre (5) par le biais de la lèvre d'égouttement (11) au niveau du raccord d'embout (2), le bouchon verseur pouvant être encliqueté dans les deux positions d'extrémité dans les moyens d'encliquetage au niveau du couvercle de fermeture (1) et du raccord d'embout (2).

9. Bouchon verseur pour l'embout d'un bidon ou d'un récipient quelconque selon l'une quelconque des revendications précédentes, ***caractérisé en ce que*** le couvercle de fermeture (1) présente, dans la région à l'extérieur de son tube (4) s'étendant vers le bas, au moins un cône d'encliquetage (16) faisant saillie vers le bas au niveau d'une plaque (10) pouvant être arrachée en tant que garantie de première ouverture, lequel au moins un cône d'encliquetage (16), dans la position de fermeture du couvercle de fermeture (1), peut être encliqueté dans une douille (19) servant de trou d'encliquetage au niveau du raccord d'embout (2), et ensuite, du fait de cet encliquetage, le couvercle de fermeture (1) ne peut être amené hors de la position de fermeture que par rupture d'au moins un pont de matériau (9) en tant que zone destinée à la rupture au niveau de la plaque (10).

10. Bouchon verseur pour l'embout d'un bidon ou d'un récipient quelconque selon l'une quelconque des revendications 1 à 8, ***caractérisé en ce que*** le couvercle de fermeture (1) forme une partie d'un disque circulaire qui, vu de dessus, reste au niveau de la partie extérieure en tant que garantie de première ouverture, et le disque circulaire, vu de dessus, présente un segment manquant dans la position de versement de telle sorte qu'une ouverture soit préservée pour le jet de versement dans la position retournée à l'envers.

11. Bouchon verseur pour l'embout d'un bidon ou d'un récipient quelconque selon l'une quelconque des revendications 1 à 9, ***caractérisé en ce que*** le couvercle de fermeture (1) présente, au niveau de son côté supérieur, une barrette de préhension (3) faisant saillie vers le haut et s'étendant diamétralement au-dessus du côté supérieur du couvercle de fermeture (1).

12. Bouchon verseur pour l'embout d'un bidon ou d'un récipient quelconque selon l'une quelconque des revendications précédentes, ***caractérisé en ce que*** le raccord d'embout (2) forme, sur au moins 180° le long de sa périphérie, une lèvre d'égouttement (11) faisant saillie radialement, qui est décalée en arrière par rapport au reste de son rayon, et **en ce que** la région en dessous de cette lèvre d'égouttement (11) au niveau du raccord d'embout (2) est rétrécie sur une hauteur de 2 à 5 mm et à l'extrémité inférieure du rétrécissement (12), forme un épaulement (16) pour recevoir de manière ajustée le bord inférieur de forme correspondante du couvercle de fermeture (1) pouvant être appliqué.
